# EUROPÄISCHE PATENTSCHRIFT

(11) **EP 1 053 116 B1**
(45) Veröffentlichungstag und Bekanntmachung des Hinweises auf die Patenterteilung: **09.04.2003**
(21) Anmeldenummer: 99907367.9
(22) Anmeldetag: 14.01.1999
(51) Int. Cl.: B60G 17/04, B60G 21/10

(54) **FEDERUNGSSYSTEM FÜR EIN FAHRZEUG**
VEHICLE SUSPENSION SYSTEM
SYSTEME AMORTISSEUR POUR UN VEHICULE

(30) Priorität: 04.02.1998 DE 19804288
(43) Veröffentlichungstag der Anmeldung: 22.11.2000
(73) Patentinhaber: DaimlerChrysler AG, 70567 Stuttgart (DE)
(72) Erfinder: FRÜHAUF, Frank, D-73773 Aichwald (DE); RUTZ, Rüdiger, D-73257 Köngen (DE)
(86) Internationale Anmeldenummer: EP9900171
(87) Internationale Veröffentlichungsnummer: WO99039930

(56) Entgegenhaltungen:
- EP-A- 0 348 286
- US-A- 3 955 807
- US-A- 4 275 900
- US-A- 4 364 582
- US-A- 4 896 752

## Beschreibung

Die Erfindung betrifft ein Federungssystem für ein Fahrzeug nach dem Oberbegriff des Anspruches 1.

Aus der EP 04 27 046 A1 ist ein hydropneumatisches Federungssystem für ein Fahrzeug bekannt, das einen hydraulischen Stellzylinder zwischen jeweils einer Radaufhängung und dem Aufbau des Fahrzeugs umfaßt, der mit einem Gasspeicher kommuniziert. Die beiden Druckräume zu beiden Seiten des Kolbens des Stellzylinders sind mit dem Hydraulikfluid-Aufnahmeraum des Gasspeichers verbunden, so daß bei einer Bewegung des Kolbens des Stellzylinders das Hydraulikfluid in den Aufnahmeraum des Gasspeichers verdrängt bzw. aus diesem gefördert wird. Der Aufnahmeraum des Gasspeichers ist über eine Membran von einem Gasraum im Gasspeicher getrennt, wobei das von dem Hydraulikfluid über die Membran beaufschlagte kompressible Gas entsprechend der Gaskennlinie ein weiches und elastisches Federverhalten bewirkt; mit zunehmenden Belastungen verläuft die Gaskennlinie progressiv.

Dieses hydropneumatische Federungssystem hat den Nachteil, daß eine vollständige Entlastung des pneumatischen Gasspeichers nicht möglich ist. Der Gasspeicher ist mit einem vorgegebenen Druck vorgespannt, sinkt der Druck unter die Vorspannung, fällt die Gegenkraft schlagartig ab und es ist keine Kraftübertragung mehr möglich. Dies hat zur Folge, daß bei einer Entlastung eines Rades, beispielsweise bei Kurvenfahrten, die Gefahr besteht, daß das entlastete Federbein in den Bereich eines unzulässig geringen Druckes unterhalb der Vorspannung gerät.

Mit Hilfe eines Regelkonzeptes, bei dem mittels einer Pumpen/Motor-Einrichtung Hydraulikfluid je nach Belastungszustand gezielt den stärker belasteten Federbeinen zugeführt wird, ist es zwar möglich, gefährliche und instabile Fahrzustände zu vermeiden. Es können beispielsweise Wankbewegungen, insbesondere Wankschwingungen mit schwellender Belastung des kurveninneren und des kurvenäußeren Rades, unterdrückt werden. Bei einem Ausfall der Regelung bietet dieses System aber kein ausreichend sicheres Notlaufverhalten.

Aus der gattungsbildenden Druckschrift US 39 55 807 geht ein hydraulisches Federbein eines Fahrzeuges hervor, dessen Hydraulikkammer mit einem Speicherelement verbunden ist, in welchem ein Elastomer angeordnet ist. Das Elastomer in dem Speicherelement trennt einen Hydraulikraum von einem Gasraum. Bei einer Tauchbewegung des Federbeins wird Hydraulikmedium in den Hydraulikraum des Speicherelements verdrängt, gleichzeitig wird das Elastomer in Richtung des Gasraumes verschoben. Auf Grund der verschiedenartigen Kompressibilitäten des Gases im Gasraum und des Elastomers und auf Grund der Reihenschaltung von Gasraum und Elastomer erhält man eine von den spezifischen Eigenschaften des Gases und des Elastomers bestimmte, nichtlineare Kennlinie.

Diese Ausführung hat den Nachteil, dass ein lineares, Hooke'sches Federverhalten auf Grund der nichtlinearen Gaseigenschaften nicht nachgebildet werden kann. Außerdem ist auch mit dieser Ausführung eine vollständige Entlastung des pneumatischen Gasspeichers nicht möglich.

Die FR-A-23 62 017 zeigt ein Federungssystem mit zwei parallelen Gas/Hydraulikspeichern, die über eine Verbindungsleitung verbunden sind, in welcher sich ein einstellbares Ventil befindet. Auf Grund des Größenunterschiedes der beiden Gas/Hydraulikspeicher können verschiedene Kennlinien in Abhängigkeit der auf das Federungssystem einwirkenden Belastung aktiviert werden. Es ist jedoch auf Grund der gasspezifischen Eigenschaften immer nur ein nichtlineares Federungsverhalten zu realisieren. Ein lineares Federungsverhalten ist dagegen nicht möglich.

Die US 48 96 752 zeigt ein Federbein, welches vergleichbar ist mit demjenigen aus der FR-A-23 62 017. In Abhängigkeit der Federungsbewegung wird jeweils einer von zwei Gas/Hydraulikspeichern beaufschlagt. Auch bei der US 48 96 752 ist das Federungsverhalten nichtlinear.

Der Erfindung liegt das Problem zugrunde, ein hydropneumatisches Federungssystem für Fahrzeuge mit einem weitgehend linearen Federverhalten bis zur vollständigen Entlastung auszubilden.

Dieses Problem wird erfindungsgemäß mit den Merkmalen des Anspruches 1 gelöst.

Durch den Einsatz des zusätzlichen Elastomer-Speicherelements wird eine näherungsweise lineare Kennlinie des Federungssystems bis zur vollständigen Entlastung erreicht. Das Elastomer hat ein lineares Federverhalten gemäß dem Hooke'schen Gesetz, wobei je nach gewünschter Steifigkeit die Federkonstante durch die Wahl des Elastomers einstellbar ist.

Der Elastomerspeicher ergänzt den Gasspeicher insbesondere bei niedrigen Belastungen. Da gemäß der Erfindung der Elastomerspeicher und der Gasspeicher parallel angeordnet und beide Speicher über eine gemeinsame Hydraulikfluid-Verbindungsleitung mit dem Stellelement verbunden sind, kann das Federverhalten der Speicher so aufeinander abgestimmt werden, daß eine Arbeitsteilung zwischen den Speichern stattfindet. Bei niedrigen Belastungen wird im Elastomerspeicher ein Gegendruck aufgebaut, der insbesondere bei Wankbewegungen zu einem stabilen Fahrverhalten beiträgt. Bei hohen Belastungen legt sich das Elastomer zweckmäßig an ein Stützgehäuse an und liefert keinen Beitrag zur Federung, die nun ausschließlich über den Gasspeicher erfolgt. Aufgrund des weichen Federverhaltens des Gasspeichers werden dabei insbesondere niederfrequente Aufbauschwingungen abgefedert.

Gemäß der Erfindung weist das Federungssystem einen weiteren Gasspeicher auf, der über eine eigene Verbindungsleitung mit dem Stellglied verbunden ist und die Funktion eines Ausgleichsspeichers einnimmt, insbesondere eines zentralen Ausgleichsspeichers für mehrere Stellglieder eines Fahrzeugs.

Der Ausgleichsspeicher und der Elastomerspeicher werden im passiven System frequenzselektiv beaufschlagt, indem niederfrequente Schwingungen dem Ausgleichsspeicher und höherfrequente Schwingungen dem Elastomerspeicher zugeführt werden. Die Frequenzselektion erfolgt vorteilhaft über eine Pumpen/Motor-Einrichtung, die im Strömungsweg zwischen dem Ausgleichsspeicher und dem Stellglied angeordnet ist und aufgrund ihrer Eigendynamik im passiven Betrieb im wesentlichen nur niedrige Frequenzen bis zur Eigenfrequenz auf den Ausgleichsspeicher überträgt, wobei diese Frequenzen etwa den typischen Frequenzen der vertikalen Aufbauschwingungen entsprechen. Zugleich wird eine Dämpfung durch die Drosselung des Volumenstroms in der Pumpen/Motor-Einrichtung erzielt. Höherfrequente Schwingungen oberhalb der Eigenfrequenz werden aufgrund der Trägheit der Pumpen/Motor-Einrichtung nicht mehr auf den Ausgleichsspeicher übertragen, sondern nur auf den Elastomerspeicher.

Wegen des linearen Federverhaltens des Elastomers eignet sich dieses besonders gut für aktive Federungssysteme, beispielsweise, um Wankschwingungen in Kurvenfahrten zu unterdrücken oder zu überkompensieren. Je nach Regelungskonzept können aber auch weitere Systemfreiheitsgrade wie Nicken, Hubbewegungen, das Eigenlenkverhalten oder ein lastunabhängiges Grundniveau der Einfederung beeinflußt werden.

Die Regelung des Federungssystems erfolgt zweckmäßig über die Pumpen/Motor-Einrichtung, wobei entweder eine Drehzahlregelung oder eine Volumenstromregelung zum Einsatz kommen kann. Bei Verwendung eines Elektromotors in der Pumpen/Motor-Einrichtung wird dessen Drehzahl geregelt. Dagegen wird der Volumenstrom des von der Pumpe geförderten Fluidstroms geregelt, wenn die Pumpen/Motor-Einrichtung vom Verbrennungsmotor des Fahrzeugs mit vorteilhaft konstanter Drehzahl angetrieben wird.

Vorzugsweise sind zumindest zwei Stellglieder zusammengeschaltet, indem die beiden Stellglieder einer Achse oder die diagonal gegenüberliegenden Stellglieder vorne links/hinten rechts bzw. vorne rechts/hinten links von einer gemeinsamen Pumpen/Motor-Einrichtung beaufschlagt werden. Für jedes Gesamtsystem, bestehend aus Elastomerspeichern, Stellgliedern und einer Pumpen/Motor-Einrichtung kann ein zentraler Gasspeicher als Ausgleichsspeicher vorgesehen sein. Dieses System ist hydraulisch autark, wobei die Pumpen/Motor-Einrichtung permanent mitläuft und das Federungsverhalten aktiv beeinflußt oder im Notbetrieb als Frequenzteiler wirkt. Außerdem kann die passiv betriebene Pumpen/Motor-Einrichtung auch als Generator wirken, indem die zweckmäßig als Innenzahnradpumpe ausgebildete Pumpe durch den Hydraulikstrom betätigt wird und den Elektromotor antreibt.

Um über die Erhöhung des Strömungswiderstands eine Schwingungsdämpfung zu erzielen, ist in der Verbindungsleitung des Elastomerspeichers und/oder des Gasspeichers vorteilhaft eine Drossel angeordnet, die als Festdrossel oder auch variabel einstellbar ausgebildet sein kann.

Vorzugsweise ist das Stellglied ein Balg, insbesondere ein Rollbalg oder ein Faltenbalg. Der Balg zeichnet sich durch ein besonderes reibungsarmes Verhalten aus, wodurch ein geringstmöglicher Anteil an Energie dissipiert wird.

Weitere Vorteile und zweckmäßige Ausführungsformen sind den weiteren Ansprüchen, der Figurenbeschreibung und den Zeichnungen zu entnehmen. Es zeigen:
- Fig. 1: eine schematische Darstellung eines Federungssystems,
- Fig. 2: eine Darstellung eines Federungssystems für das Gesamtfahrzeug,
- Fig. 3: eine Darstellung eines Federungssystems für das Gesamtfahrzeug in einer anderen Ausgestaltung.

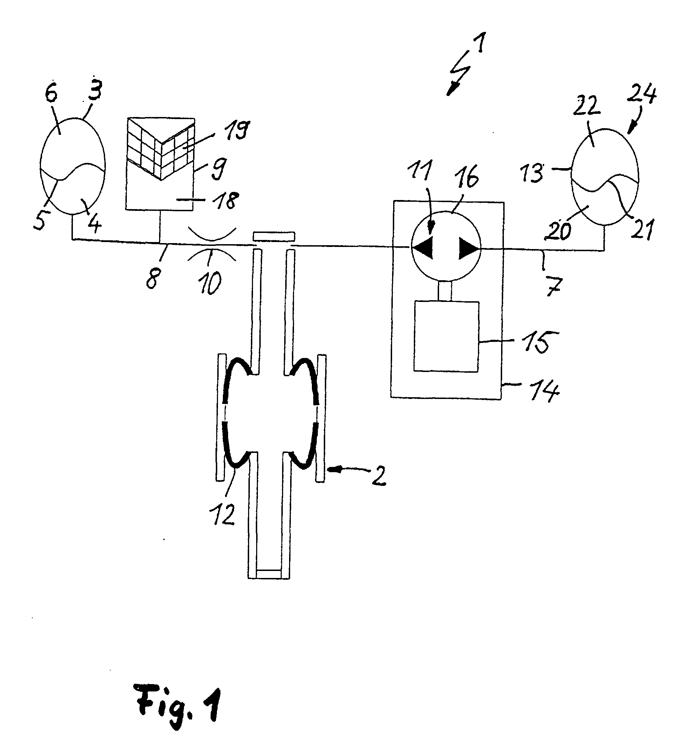

In Fig. 1 ist ein Federungssystem 1 dargestellt, das in Nutzfahrzeugen, Omnibussen oder Personenkraftwagen Anwendung findet. Das Federungssystem 1 ist als hydropneumatisches Federungssystem ausgebildet und beinhaltet ein hydraulisches Stellglied 2, das über eine Hydraulik-Verbindungsleitung 8 mit einem Elastomerspeicher 9 verbunden ist. Der Elastomerspeicher 9 besteht aus einem Gehäuse mit einem Aufnahmeraum 18 zur Aufnahme des Hydraulikfluids und einem Elastomer 19, das entweder vom Ausnahmeraum 18 über eine undurchlässige, verschiebliche Membran abgeschlossen ist oder den gesamten Gehäusequerschnitt abdeckt. Als Elastomer kommen handelsübliche Materialien mit Hooke'schem Federverhalten in Betracht, beispielsweise Gummi.

Wird aufgrund einer vertikalen Kraftkomponente das Stellglied 2 verschoben, so wird das Hydraulikfluid über die Verbindungsleitung 8 in den Aufnahmeraum 18 verdrängt bzw. aus dem Aufnahmeraum 18 abgeleitet und das Elastomer 19 zusammengedrückt bzw. entlastet. Die Federwirkung des Elastomers 19 erfolgt nach dem Hooke schen Kraftgesetz linear, wobei eine vollständige, kontinuierliche Entlastung bis auf Null möglich ist.

In der Verbindungsleitung 8 ist als Schwingungsdämpfer zwischen dem Stellglied 2 und dem Elastomerspeicher 9 eine Drossel 10 angeordnet, die zweckmäßig als Festdrossel ausgebildet ist. Es kommt aber gegebenenfalls auch eine variabel einstellbare Drossel in Betracht.

Parallel und unmittelbar benachbart zum Elastomerspeicher 9 ist ein Gasspeicher 3 angeordnet, der über die gleiche Verbindungsleitung 8 mit Hydraulikfluid versorgt wird und einen Aufnahmeraum 4 für das Hydraulikfluid sowie einen Gasraum 6 aufweist, der über eine Membran 5 vom Aufnahmeraum 4 abgeteilt ist. Das Federungsverhalten des Gasspeichers 3 und das Verhalten des Elastomerspeichers 9 sind ergänzend aufeinander abgestimmt. Der Gasspeicher federt oberhalb seiner Vorspannung; in diesem Bereich leistet der Elastomerspeicher keinen Beitrag, da das Elastomer zweckmäßig vollständig zusammengedrückt ist und nicht federn kann. Der Gasspeicher überträgt unterhalb seiner Vorspannung keine Federkraft, die dann ausschließlich über das in diesem Bereich federnde Elastomer erzeugt wird. Durch die Kombination von Elastomerspeicher 9 und Gasspeicher 3 wird eine näherungsweise lineare Federkennlinie über den gesamten Belastungsbereich erzeugt.

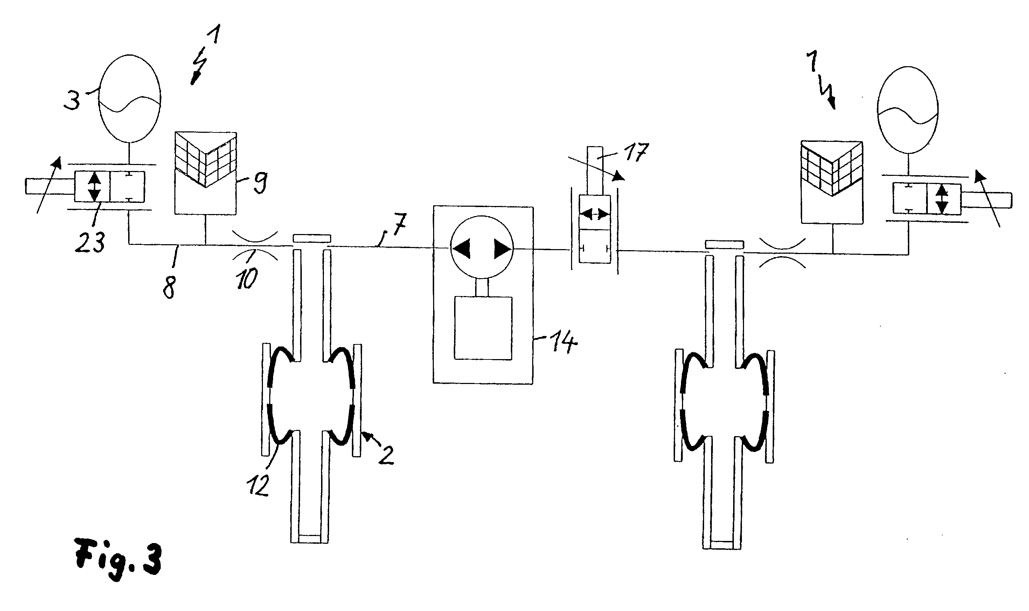

Gegebenenfalls kann ein Sperrventil vorgesehen sein (siehe Fig. 3), um den Gasspeicher vom Federungssystem zu trennen, beispielsweise um bei hoher Kurvendynamik ein federndes Verhalten zu vermeiden.

Das Stellglied 2 ist als zylindrischer Balg 12 ausgeführt, im gezeigten Ausführungsbeispiel als reibungsarmer Rollbalg. Gemäß einer nicht gezeigten Ausführung kann der Balg 12 auch ein Faltenbalg sein.

Dem Federungssystem 1 ist ein Ausgleichsspeicher 24 in Form eines Gasspeichers 13 mit einem weiteren Aufnahmeraum 20 für Hydraulikfluid, einem Gasraum 22 und einer zwischenliegenden Membran 21 zugeordnet. Der Ausgleichsspeicher 24 kommuniziert über eine Hydraulik-Verbindungsleitung 7 mit dem Stellglied 2. Im Strömungsweg zwischen dem Stellelement 2 und dem Ausgleichsspeicher 24 ist für ein aktives Verhalten des Federungssystems 1 eine Pumpen/Motor-Einrichtung 14 angeordnet, die gemäß einer zweckmäßigen Ausführung einen über die Drehzahl regelbaren Elektromotor 15 und eine vom Elektromotor 15 betriebene Pumpe 16, insbesondere eine Innenzahnradpumpe, zur Förderung des Hydraulikfluids aufweist. Je nach Förderrichtung der Pumpe 16 wird Hydraulikfluid aus den Aufnahmeräumen 4 und 18 des Gasspeichers 3 bzw. des Elastomerspeichers 9 und dem Stellglied 2 abgezogen und dem Ausgleichsspeicher 24 zugeführt oder in umgekehrter Richtung Hydraulikfluid aus dem Ausgleichsspeicher 24 abgezogen und dem Elastomerspeicher 9 bzw. dem Gasspeicher 3 sowie dem Stellglied 2 zugeführt.

Wird dem Gasspeicher 3 und dem Elastomerspeicher 9 sowie dem Stellglied 2 Hydraulikfluid zugeführt, so erhöht sich der Druck im System Stellelement 2, Gasspeicher 3 und Elastomerspeicher 9. Aufgrund des höheren Druckniveaus können höhere Kräfte, beispielsweise bei Kurvenfahrt im kurvenäußeren Federbein, übertragen werden. Zugleich herrscht im Ausgleichsspeicher 24 ein niedrigerer Druck.

Wird umgekehrt Hydraulikfluid aus dem Gasspeicher 3 und dem Elastomerspeicher 9 sowie dem Stellglied 2 abgezogen, fällt der Druck ab und die übertragbaren Kräfte sind geringer, beispielsweise im kurveninneren Federbein. Infolge der Aufnahme zusätzlichen Hydraulikfluids ist der Druck im Ausgleichsspeicher 24 erhöht.

Werden mehrere Federsysteme für die jeweiligen Räder eines Fahrzeugs vorgesehen, ist die Regelung mehrerer Aufbaufreiheitsgrade wie Wanken, Nicken, Verspannen, Hubschwingungen und Niveauregulierung möglich.

Die Pumpen/Motor-Einrichtung 14 sorgt auch für ein gutes Notlaufverhalten für den Fall, daß die Regelung außer Betrieb gesetzt ist. Aufgrund der Trägheit der Einrichtung wirkt die Pumpe 16 als Drossel 11, so daß die Fluidströme in der Verbindungsleitung 7 gedrosselt und Schwingungen gedämpft werden. Zugleich wirkt die Pumpen/Motor-Einrichtung 14 frequenzselektiv, indem nur Schwingungen mit Frequenzen unterhalb der Eigenfrequenz der Pumpen/Motor-Einrichtung 14 zum Ausgleichsspeicher 24 übertragen werden, wobei derartige niederfrequente Schwingungen üblicherweise vertikalen Aufbauschwingungen im Frequenzbereich bis etwa 3 Hz entsprechen, die durch das weiche Federverhalten des Ausgleichsspeichers beantwortet werden. Oberhalb der Eigenfrequenz werden Schwingungen höherer Frequenz zum Elastomerspeicher 9, gegebenenfalls auch zum parallel zum Elastomerspeicher 9 angeordneten Gasspeicher 3 geleitet.

Wird die motorbetriebene Pumpe 16 nicht aktiv angesteuert, sondern arbeitet im passiven Modus und wirkt als Drossel 11 für den vom Stellelement verdrängten Fluidstrom, kann der Elektromotor 15 als Generator betrieben werden. Um das Notlaufverhalten im passiven Modus zu verbessern, kann der Elektromotor 15 kurzgeschlossen werden, wobei durch den erhöhten Widerstand die Dämpfung im Federungssystem 1 verbessert wird.

Die Pumpe 16 der Pumpen/Motor-Einrichtung 14 kann in einer anderen Ausführung auch vom Verbrennungsmotor des Fahrzeugs betrieben werden, wobei in diesem Fall die Regelung des Federungssystems als Volumenstromregelung ausgeführt ist.

Bei einem rein passiven Betrieb kann die Pumpen/Motor-Einrichtung 14 auch durch eine Drossel ersetzt werden.

Das Federungssystem 1 bildet ein hydraulisch abgeschlossenes, autarkes System, in welchem die Pumpe 16 bei jeder Bewegung des Stellglieds 2 sowohl im aktiven als auch im passiven Modus permanent mitläuft.

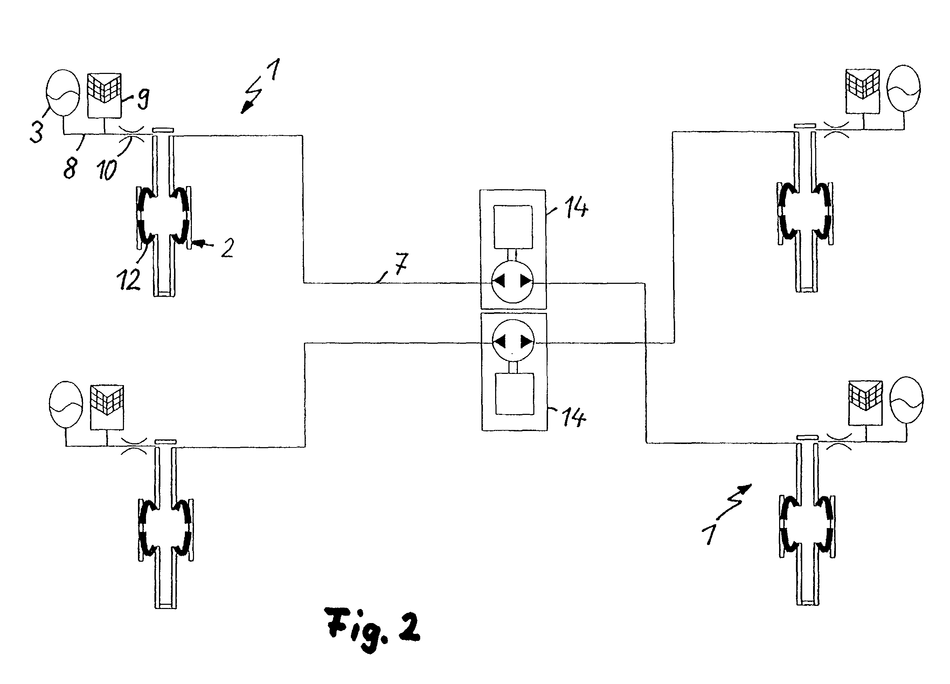

Fig. 2 zeigt mehrere modular aufgebaute, in sich identische Einzel-Federungssysteme 1, die zu einem Gesamt-Federungssystem zusammengeschaltet sind. Jedes Federungssystem 1 besteht aus einem als Balg 12 ausgebildeten Stellglied 2, das über die Verbindungsleitung 8, in der eine Drossel 10 angeordnet ist, mit den parallel geschalteten Speichern, dem Gasspeicher 3 und dem Elastomerspeicher 9, kommuniziert. Über die Verbindungsleitung 7, die durch eine Pumpen/Motor-Einrichtung 14 geführt ist, sind jeweils zwei diagonal gegenüberliegende Federungssysteme 1 zusammengekoppelt, so daß entweder die Federungssysteme vorne links und hinten rechts oder vorne rechts und hinten links von einer gemeinsamen Pumpen/Motor-Einrichtung 14 beaufschlagt werden. In dieser Schaltung kann sowohl das Wankverhalten als auch das Nickverhalten des Fahrzeugs beeinflußt werden.

Das in Fig. 3 dargestellte Gesamtsystem ist aus jeweils zwei achsweise zusammengeschalteten Einzel-Federungssystemen 1 aufgebaut. Sowohl an der Vorderachse als auch an der Hinterachse sind jeweils zwei in sich identische Einzel-Federungssysteme 1 über die Verbindungsleitung 7 und die Pumpen/Motor-Einrichtung 14 zusammengekoppelt, wobei die Verbindung über ein Not-Sperrventil 17, welches in der Verbindungsleitung 7 angeordnet ist, bei einem Ausfall der Regelung unterbrochen werden kann, so daß jedes Einzel-Federungssystem in sich autark arbeitet. Jedes Federungssystem 1 umfaßt ein als Balg 12 ausgebildetes Stellglied 2, einen über ein Sperrventil 23 absperrbaren Gasspeicher 3 und einen Elastomerspeicher 9. In der Verbindungsleitung 8 zwischen den Speichern 3, 9 und dem Stellglied 2 ist eine Drossel 10 angeordnet. Das Sperrventil 23 kann betätigt werden, um beispielsweise bei hoher Kurvendynamik den Gasspeicher 3 abzusperren.

In den Ausführungsbeispielen nach Fig. 2 und 3 ist gemäß der Erfindung jeder Pumpen/Motor-Einrichtung 14 ein nicht dargestellter Ausgleichsspeicher zugeordnet.

## Patentansprüche

1. Federungssystem für ein Fahrzeug, mit einem hydraulischen Stellglied (2) und einem Hydraulikfluid aufnehmenden Speicherelement, das als Elastomerspeicher (9) mit einem Aufnahmeraum (18) für das Hydraulikfluid ausgebildet ist und mit dem Stellglied (2) über eine Verbindungsleitung (7, 8) kommuniziert, und mit einem dem Elastomerspeicher (9) zugeordneten Gasspeicher (3),
**dadurch gekennzeichnet,**
- **daß** der Elastomerspeicher (9) parallel zum Gasspeicher (3) angeordnet ist und der Elastomerspeicher (9) und der Gasspeicher (3) über eine gemeinsame Verbindungsleitung (8) mit dem Stellglied (2) verbunden sind,
- **daß** ein weiterer Gasspeicher (13) als Ausgleichsspeicher (24) vorgesehen ist, der über eine Verbindungsleitung (7) mit dem Stellglied (2) verbunden ist,
- **daß** der Ausgleichsspeicher (24) und der Elastomerspeicher (9) frequenzselektiv beaufschlagbar sind.

2. Federungssystem nach Anspruch 1,
**dadurch gekennzeichnet,**
**daß** in der Verbindungsleitung (8) zwischen dem Elastomerspeicher (9) und dem Stellglied (2) eine Drossel (10) angeordnet ist.

3. Federungssystem nach Anspruch 2,
**dadurch gekennzeichnet,**
**daß** die Drossel (10) als Festdrossel ausgebildet ist.

4. Federungssystem nach einem der Ansprüche 1 bis 3,
**dadurch gekennzeichnet,**
**daß** in der Verbindungsleitung (7, 8) zwischen dem Gasspeicher (3, 13) und dem Stellglied (2) eine Drossel (10, 11) angeordnet ist.

5. Federungssystem nach einem der Ansprüche 1 bis 4,
**dadurch gekennzeichnet,**
**daß** das Stellglied (2) ein Balg (12) ist.

6. Federungssystem nach Anspruch 5,
**dadurch gekennzeichnet,**
**daß** der Balg (12) ein Rollbalg ist.

7. Federungssystem nach Anspruch 5,
**dadurch gekennzeichnet,**
**daß** der Balg (12) ein Faltenbalg ist.

8. Federungssystem nach einem der Ansprüche 1 bis 7,
**dadurch gekennzeichnet,**
**daß** im Strömungsweg zwischen dem Ausgleichsspeicher (24) und dem Stellglied (2) eine Pumpen/Motor-Einrichtung (14) vorgesehen ist.

9. Federungssystem nach Anspruch 8,
**dadurch gekennzeichnet,**
**daß** der Ausgleichsspeicher (24) und der Elastomerspeicher (9) in getrennten Verbindungsleitungen (7, 8) angeordnet sind und die Pumpen/Motor-Einrichtung (14) den Ausgleichsspeicher (24) und den Elastomerspeicher (9) beaufschlagt.

10. Federungssystem nach Anspruch 8 oder 9,
**dadurch gekennzeichnet,**
**daß** die Pumpen/Motor-Einrichtung (14) regelbar ist.

11. Federungssystem nach einem der Ansprüche 8 bis 10,
**dadurch gekennzeichnet,**
**daß** die Pumpen/Motor-Einrichtung (14) einen Elektromotor (15) umfaßt.

12. Federungssystem nach Anspruch 11,
**dadurch gekennzeichnet,**
**daß** dem Elektromotor (15) eine Drehzahlregelung unterlegt ist.

13. Federungssystem nach einem der Ansprüche 8 bis 10,
**dadurch gekennzeichnet,**
**daß** die Pumpen/Motor-Einrichtung (14) vom Verbrennungsmotor des Fahrzeugs betrieben wird.

14. Federungssystem nach Anspruch 13,
**dadurch gekennzeichnet,**
**daß** der Pumpen/Motor-Einrichtung (14) eine Volumenstromregelung unterlegt ist.

15. Federungssystem nach einem der Ansprüche 8 bis 14,
**dadurch gekennzeichnet,**
**daß** das Stellglied (2), der Gasspeicher (3, 13), der Elastomerspeicher (9) und die Pumpen/Motor-Einrichtung (14) ein abgeschlossenes hydraulisches System bilden.

16. Federungssystem nach einem der Ansprüche 8 bis 15,
**dadurch gekennzeichnet,**
**daß** eine gemeinsame Pumpen/Motor-Einrichtung (14) für zumindest zwei Stellglieder (2) vorgesehen ist.

17. Federungssystem nach Anspruch 16,
**dadurch gekennzeichnet,**
**daß** die zwei Stellglieder (2) parallel angeordnet zwischen den Rädern einer gemeinsamen Achse und dem Fahrzeugaufbau von der Pumpen/Motor-Einrichtung (14) beaufschlagbar sind.

18. Federungssystem nach Anspruch 17,
**dadurch gekennzeichnet,**
**daß** die zwei Stellglieder (2) diagonal gegenüberliegend an Vorder- und Hinterachse von der Pumpen/Motor-Einrichtung (14) beaufschlagbar sind.

19. Federungssystem nach einem der Ansprüche 16 bis 18,
**dadurch gekennzeichnet,**
**daß** zwischen den Stellgliedern (2) ein Not-Sperrventil (17) zur Unterbrechung des Strömungswegs zwischen den Stellgliedern (2) angeordnet ist.

20. Federungssystem nach einem der Ansprüche 16 bis 19,
**dadurch gekennzeichnet,**
**daß** ein gemeinsamer Ausgleichsspeicher (24) für alle Stellglieder (2) vorgesehen ist.

## Claims

1. Suspension system for a motor vehicle having a hydraulic actuator (2) and an accumulator element containing hydraulic fluid, provided in the form of an elastomer accumulator (9) with a housing compartment (18) for the hydraulic fluid communicating with the actuator (2) via a connecting line (7, 8), a gas accumulator (3) co-operating with the elastomer accumulator (9),
**characterised in that**
- the elastomer accumulator (9) is arranged parallel with the gas accumulator (3) and the elastomer accumulator (9) and the gas accumulator (3) are connected to the actuator (2) via a common connecting line (8),
- another gas accumulator (13) is provided as a compensatory accumulator (24), which is connected to the actuator (2) via a connecting line (7),
- the compensatory accumulator (24) and the elastomer accumulator (9) can be pressurised on a frequency-selective basis.

2. Suspension system as claimed in claim 1,
**characterised in that**
a throttle (10) is disposed in the connecting line (8) between the elastomer accumulator (9) and the actuator (2).

3. Suspension system as claimed in claim 2,
**characterised in that**
the throttle (10) is a fixed throttle.

4. Suspension system as claimed in one of claims 1 to 3,
**characterised in that**
a throttle (10, 11) is disposed in the connecting line (7, 8) between the gas accumulator (3, 13) and the actuator (2).

5. Suspension system as claimed in one of claims 1 to 4,
**characterised in that**
the actuator (2) is a bellows (12).

6. Suspension system as claimed in claim 5,
**characterised in that**
the bellows (12) is a roll bellows.

7. Suspension system as claimed in claim 5,
**characterised in that**
the bellows (12) is a pleated bellows.

8. Suspension system as claimed in one of claims 1 to 7,
**characterised in that**
a pump/motor unit (14) is provided in the flow path between the compensatory accumulator (24) and the actuator (2).

9. Suspension system as claimed in claim 8,
**characterised in that**
the compensatory accumulator (24) and the elastomer accumulator (9) are disposed in separate connecting lines (7, 8) and the pump/motor unit (14) pressurises the compensatory accumulator (24) and the elastomer accumulator (9).

10. Suspension system as claimed in claim 8 or 9,
**characterised in that**
the pump/motor unit (14) can be regulated.

11. Suspension system as claimed in one of claims 8 to 10,
**characterised in that**
the pump/motor unit (14) incorporates an electric motor (15).

12. Suspension system as claimed in claim 11,
**characterised in that**
the speed of the electric motor (15) can be regulated.

13. Suspension system as claimed in one of claims 8 to 10,
**characterised in that**
the pump/motor unit (14) is operated by the internal combustion engine of the vehicle.

14. Suspension system as claimed in claim 13,
**characterised in that**
the flow volume of the pump/motor unit (14) can be controlled.

15. Suspension system as claimed in one of claims 8 to 14,
**characterised in that**
the actuator (2), the gas accumulator (3, 13), the elastomer accumulator (9) and the pump/motor unit (14) form a closed hydraulic system.

16. Suspension system as claimed in one of claims 8 to 15,
**characterised in that**
a common pump/motor unit (14) is provided for at least two actuators (2).

17. Suspension system as claimed in claim 16,
**characterised in that**
the two actuators (2) are arranged in parallel between the wheels of a common axle and the vehicle body can be pressurised by the pump/motor unit (14).

18. Suspension system as claimed in claim 17,
**characterised in that**
the two diagonally opposite actuators (2) on front and rear axle can be pressurised by the pump/motor unit (14).

19. Suspension system as claimed in one of claims 16 to 18,
**characterised in that**
an emergency check valve (17) is provided between the actuators (2) in order to cut off the flow path between the actuators (2).

20. Suspension system as claimed in one of claims 16 to 19,
**characterised in that**
a common compensatory accumulator (24) is provided for all actuators (2).

## Revendications

1. Système de suspension pour un véhicule, comportant un organe de positionnement hydraulique (2) et un élément accumulateur recevant un fluide hydraulique, qui est réalisé sous forme d'accumulateur en élastomère (9) avec une chambre de réception (18) pour le fluide hydraulique et qui communique avec l'organe de positionnement (2) via une conduite de liaison (7, 8), et comportant un accumulateur à gaz (3) associé à l'accumulateur en élastomère (9),
**caractérisé en ce que**
- l'accumulateur en élastomère (9) est agencé parallèlement à l'accumulateur à gaz (3), et l'accumulateur en élastomère (9) et l'accumulateur à gaz (3) sont reliés à l'organe de positionnement (2) via une conduite de liaison commune (8),
- un autre accumulateur à gaz (13) est prévu à titre d'accumulateur égalisateur (24) qui est relié à l'organe de positionnement (2) via une conduite de liaison (7),
- l'accumulateur égalisateur (24) et l'accumulateur en élastomère (9) sont susceptibles d'être alimentés de façon sélective en fréquence.

2. Système de suspension selon la revendication 1, **caractérisé en ce qu'**un étranglement (10) est agencé dans la conduite de liaison (8) entre l'accumulateur en élastomère (9) et l'organe de positionnement (2).

3. Système de suspension selon la revendication 2, **caractérisé en ce que** l'étranglement (10) est réalisé sous forme d'étranglement fixe.

4. Système de suspension selon l'une des revendications 1 à 3, **caractérisé en ce qu'**un étranglement (10, 11) est agencé dans la conduite de liaison (7, 8) entre l'accumulateur à gaz (3, 13) et l'organe de positionnement (2).

5. Système de suspension selon l'une des revendications 1 à 4, **caractérisé en ce que** l'organe de positionnement (2) est un soufflet (12).

6. Système de suspension selon la revendication 5, **caractérisé en ce que** le soufflet (12) est un soufflet déroulant.

7. Système de suspension selon la revendication 5, **caractérisé en ce que** le soufflet (12) est un soufflet plissé.

8. Système de suspension selon l'une des revendications 1 à 7, **caractérisé en ce qu'**un dispositif motopompe (14) est prévu dans le chemin d'écoulement entre l'accumulateur égalisateur (24) et l'organe de positionnement (2).

9. Système de suspension selon la revendication 8, **caractérisé en ce que** l'accumulateur égalisateur (24) et l'accumulateur en élastomère (9) sont agencés dans des conduites de liaison séparées (7, 8), et le dispositif motopompe (14) alimente l'accumulateur égalisateur (24) et l'accumulateur en élastomère (9).

10. Système de suspension selon l'une ou l'autre des revendications 8 et 9, **caractérisé en ce que** le dispositif motopompe (14) est réglable.

11. Système de suspension selon l'une des revendications 8 à 10, **caractérisé en ce que** le dispositif motopompe (14) comprend un moteur électrique (15).

12. Système de suspension selon la revendication 11, **caractérisé en ce qu'**un moteur électrique (15) est soumis à une régulation de vitesse de rotation.

13. Système de suspension selon l'une des revendications 8 à 10, **caractérisé en ce que** le dispositif motopompe (14) est entraîné par le moteur à combustion interne du véhicule.

14. Système de suspension selon la revendication 13, **caractérisé en ce que** le dispositif motopompe (14) est soumis à une régulation d'écoulement volumétrique.

15. Système de suspension selon l'une des revendications 8 à 14, **caractérisé en ce que** l'organe de positionnement (2), l'accumulateur à gaz (3, 13), l'accumulateur en élastomère (9) et le dispositif motopompe (14) forment un système hydraulique fermé.

16. Système de suspension selon l'une des revendications 8 à 15, **caractérisé en ce qu'**il est prévu un dispositif motopompe commun (14) pour au moins deux organes de positionnement (2).

17. Système de suspension selon la revendication 16, **caractérisé en ce que** les deux organes de positionnement (2) peuvent être alimentés par le dispositif motopompe (14) en étant agencés parallèlement entre les roues d'un essieu commun et la superstructure de véhicule.

18. Système de suspension selon la revendication 17, **caractérisé en ce que** les deux organes de positionnement (2) qui sont opposés diagonalement sur l'essieu avant et sur l'essieu arrière peuvent être alimentés par le dispositif motopompe (14).

19. Système de suspension selon l'une des revendications 16 à 18, **caractérisé en ce qu'**une valve de blocage de secours (17) est agencée entre les organes de positionnement (2) pour interrompre le chemin d'écoulement entre les organes de positionnement (2).

20. Système de suspension selon l'une des revendications 16 à 19, **caractérisé en ce qu'**il est prévu un accumulateur égalisateur commun (24) pour tous les organes de positionnement (2).
